# EUROPÄISCHE PATENTSCHRIFT

(11) **EP 3 747 122 B1**
(45) Veröffentlichungstag und Bekanntmachung des Hinweises auf die Patenterteilung: **15.11.2023**
(21) Anmeldenummer: 19701640.5
(22) Anmeldetag: 24.01.2019
(51) Int. Cl.: H02P 25/08, H02P 3/06, F04B 17/04

(54) **EINRICHTUNG ZUM BEARBEITEN EINES WERKSTÜCKS**
DEVICE FOR PROCESSING A WORKPIECE
DISPOSITIF D'USINAGE D'UNE PIÈCE

(30) Priorität: 31.01.2018 DE 102018102153
(43) Veröffentlichungstag der Anmeldung: 09.12.2020
(73) Patentinhaber: Hammelmann GmbH, 59302 Oelde (DE)
(72) Erfinder: BEDNORZ, Christoph, 59269 Beckum (DE); GRÜTER, Marc, 33378 Rheda-Wiedenbrück (DE); JARCHAU, Michael, 59302 Oelde (DE)
(74) Vertreter: Dantz, Jan Henning
(86) Internationale Anmeldenummer: PCT/EP2019/051676
(87) Internationale Veröffentlichungsnummer: WO 2019/149601

(56) Entgegenhaltungen:
- EP-A2- 2 610 490
- WO-A1-2012/034165
- WO-A1-2015/127497
- DE-A1-102011 086 572
- US-A1- 2005 072 608

## Beschreibung

Die Erfindung betrifft eine Einrichtung zum Bearbeiten eines Werkstücks nach dem Oberbegriff des Anspruchs 1.

Derartige Einrichtungen sind hinlänglich bekannt. Mit ihnen wird beispielsweise mit einem Fluiddruck von 3000 bar bis 4000 bar die Oberfläche eines Werkstücks bearbeitet zum Beispiel aufgeraut oder entgratet, wie in der EP 1 901 894 B1 beschrieben. Weitere Einrichtungen zum Bearbeiten eines Werkstücks sind aus der AT 515 943 A4 und der AT 512 322 B1 bekannt.

Der hohe Druck wird dabei durch eine Plungerpumpe erzeugt, die mehrere, in gleichem Winkelabstand zueinander auf einer Kurbelwelle gelagerte Plunger aufweist, um einen gleichbleibenden Volumenstrom zu erzeugen. Der Antrieb der Kurbelwelle, durch die eine oszillierende Bewegung der Plunger erreicht wird, erfolgt mittels eines Elektromotors, üblicherweise einem Drehstrommotor.

Entscheidend für den beispielhaft genannten Einsatz der Einrichtung ist, dass ständig, d.h. sowohl während des Betriebs der Düse wie auch bei deren Absperrung zur Unterbrechung des Volumenstroms der im wesentlichen gleich hohe Druck in der Druckleitung ansteht, durch die das Fluid von der Plungerpumpe zur Düse geführt wird.

Zur Drucküberwachung ist ein Drucksensor im Bereich der Druckleitung angeordnet, der mit dem Elektromotor in Wirkverbindung steht, derart, dass bei Unterbrechung des Fluidaustritts aus der Düse, d.h. bei deren Absperrung, der Elektromotor abgeschaltet wird, um die Plungerpumpe still zu setzen, damit der Fluiddruck in der Druckleitung nicht über den vorgegebenen Solldruck steigt. Ein Rückströmen des in der Druckleitung befindlichen Fluids nach einem Stillsetzen der Plungerpumpe in deren Arbeitsraum wird durch Rückschlagventile verhindert.

Der bislang eingesetzte Elektromotor, namentlich der Drehstrommotor, stößt hinsichtlich seiner Funktionsfähigkeit bezogen auf seine Schalthäufigkeit, d.h. die Unterbrechung der Kurbelwelle, dort an seine Grenzen, wo kurze Schaltzyklen gefordert sind.

Zwar entspricht die Leistungsabgabe eines Drehstrommotors durchaus den Erfordernissen bei Einrichtungen, die einen relativ großen Volumenstrom zur Verfügung stellen müssen und/oder die mehrere, parallel angeordnete Plungerpumpen aufweisen, jedoch ist die Bereitstellung des geforderten Drucks zum Betrieb der Düse systembedingt nur mit Verzögerung möglich, was einem optimierten Betrieb der Einrichtung entgegensteht.

Aus der DE 10 2011 086572 A1 ist eine Verdrängerpumpe bekannt, bei der ein Reluktanzmotor zum Einsatz kommt.

Der Erfindung liegt die Aufgabe zugrunde, eine Einrichtung der gattungsgemä-ßen Art so weiterzuentwickeln, dass ihre Funktionsfähigkeit mit geringem konstruktivem Aufwand verbessert wird.

Diese Aufgabe wird durch eine Einrichtung mit den Merkmalen des Anspruchs 1 und mit einem Verfahren nach Anspruch 4 gelöst.

Der erfindungsgemäße Einsatz eines Reluktanzmotors bei einer gattungsgemäßen Einrichtung führt zu deutlichen Verbesserungen zum einen in der Funktion der Einrichtung und zum anderen bei dem Bearbeitungsergebnis. Überdies ist der Betrieb der Einrichtung nunmehr optimiert, insbesondere hinsichtlich der Wirtschaftlichkeit.

Diesbezüglich ist der gegenüber einem Drehstrommotor wesentlich geringere Energieverbrauch des Reluktanzmotors zu nennen, der noch dadurch weiter reduziert wird, dass, wie nach einem weiteren Gedanken der Erfindung vorgesehen, die Bremsenergie beim Abbremsen des Reluktanzmotors durch einen Energiespeicher kurzzeitig gespeichert und beim Anfahren des Reluktanzmotors für dessen Beschleunigung wieder zur Verfügung gestellt wird. Mit dem Reluktanzmotor steht dazu ein kapazitiver Energiespeicher über einen Frequenzumrichter in Wirkverbindung zur Speicherung der Bremsenergie.

Ein weiterer Vorteil des Reluktanzmotors besteht darin, dass relativ große Nennleistungen zur Verfügung gestellt werden, beispielsweise >300 KW, die erforderlich sind, um die Einrichtung insbesondere in den zum Stand der Technik beschriebenen Einsatzgebieten zu betreiben. Hierzu zählt nicht nur der Einsatz bei Einzelverbrauchern, sondern auch bei mehreren, funktional miteinander verbundenen schaltbaren Verbrauchern.

Der genannte Bremswiderstand, der mit dem Zwischenkreis eines Frequenzumformers verbunden ist, unterstützt eine schnelle Absenkung der Drehzahl des Reluktanzmotors, was sich gleichfalls vorteilhaft auf den Betrieb der Einrichtung auswirkt.

Da der Reluktanzmotor mit einer sehr geringen Nenndrehzahl betreibbar ist, kann auf den Einsatz eines Getriebes verzichtet werden, wobei diese Nenndrehzahl des Reluktanzmotors der Antriebsdrehzahl der Plungerpumpe entspricht.

Zur Drucküberwachung bzw. zur Abschaltung des Reluktanzmotors ist im Bereich der Druckleitung, in der dauerhaft der im Wesentlichen gleiche Fluiddruck ansteht, ein Drucksensor angeordnet, der bei Schließung eines dem Verbraucher, bspw. der Düse, zugeordneten Absperrventils zur Unterbrechung des austretenden Volumenstroms eine Druckerhöhung erkennt und die Reduzierung der Drehzahl des Reluktanzmotors bis hin zur Drehzahl Null durch Abbremsen initiiert. Dazu ist der Drucksensor mit einem einen ermittelten Ist- mit einem hinterlegten Sollwert vergleichenden Regler verbunden, so dass sich ein geschlossener Regelkreis ergibt.

Bei abgesperrter Düse und einer Drehzahl des Reluktanzmotors im Bereich von Null kann eine geringe Leckage, beispielsweise verursacht durch verschlissene Druckventile der Pumpe oder undichte Rohrleitungen als eine langsame Änderung des Drucks in der Druckleitung über die Zeit erkannt werden, was letztendlich eine Zustandsüberwachung der Anlage möglich macht.

Nach einem weiteren Gedanken der Erfindung ist ein Dämpfer vorgesehen, der vor dem dem Verbraucher zugeordneten Absperrventil in der Druckleitung angeordnet ist, in Strömungsrichtung des Fluids gesehen nach den Rückschlagventilen.

Mithilfe dieses Dämpfers wird eine Druckerhöhung, wie sie im Nachlauf des Reluktanzmotors nach dessen Ausschalten sich einstellt, durch Kompression des Fluids so weit ausgeglichen, dass diese Druckerhöhung auf die beteiligten Bauteile unschädlich ist.

Zu einer optimierten Standzeit der Einrichtung trägt u.a. die relativ niedrige Temperatur beim Betrieb des Reluktanzmotors bei, da bauartbedingt ein solcher Motor keine Rotorwicklungen aufweist und somit in der Folge keine Rotorverlustleistung, so dass sich daraus ein hoher Wirkungsgrad ergibt.

Überdies ist die Störanfälligkeit des Reluktanzmotors äußerst gering, da weder Magnete noch Käfigläufer Bestandteil sind und überdies durch die geringen Temperaturen Lager geschont werden.

Wie erwähnt, eignet sich die neue Einrichtung insbesondere für industrielle Reinigungs-, Entgrat- oder Aufrauprozesse, wobei entsprechende hydraulische Werkzeuge wie Reinigungslanzen, Düsensysteme oder Flachstrahldüsen zum Einsatz kommen. Besonders hervorzuheben ist, dass mittels der Erfindung eine Bearbeitung mit äußerst kurzen Taktzeiten, d.h. einem schnellen Ein- und Ausschalten des Volumenstroms möglich ist.

Die erfindungsgemäße Einrichtung ist besonders geeignet für den Einsatz bei einem sogenannten Common-Rail-System, bei dem mehrere Plungerpumpen in eine gemeinsame Druckleitung fördern, an die eine Vielzahl von Verbrauchern, insbesondere Düsen, angeschlossen sind, wobei die Plungerpumpen des Systems mittels mindestens eines Reluktanzmotors betrieben werden.

Die Erfindung betrifft auch ein Verfahren zum Betreiben einer Einrichtung gemäß dem Anspruch 1. Danach wird anhand einer bekannten aktuellen Drehzahl der Plungerpumpe der geförderte Volumenstrom mit dem von dem oder den Verbrauchern abgenommenen Volumenstrom bzw. Summen-Volumenstrom ständig verglichen und eine Abweichung von einer Sollgröße signalisiert, z.B. optisch und/oder akustisch, oder der Reluktanzmotor und damit die Plungerpumpe werden abgeschaltet.

Mithilfe dieses Verfahrens ist eine Leckageüberwachung der Einrichtung möglich. Bei einer Leckage während des Betriebs der Einrichtung fällt nämlich der Fluiddruck in der Druckleitung ab, was durch den Drucksensor erkannt wird. In der Folge ist der dem Verbraucher zur Verfügung stehende Volumenstrom reduziert. Um den Druck in der Druckleitung auf einer Sollgröße zu halten, würde die Drehzahl der Plungerpumpe entsprechend erhöht. Die Differenz zwischen dem vom Verbraucher geforderten bekannten Volumenstrom und dem durch Drehzahlerhöhung der Plungerpumpe höheren geförderten Volumenstrom ist Hinweis auf eine Leckage, die quasi unmittelbar erkannt wird und zur erwähnten Signalgebung oder Abschaltung des Reluktanzmotors führt. Damit werden Schäden an der Einrichtung oder anderen beteiligten Bauteilen verhindert, ebenso wie Energieverluste, die sich beim Weiterbetrieb der Einrichtung ohne Leckageerkennung ergeben.

Weitere vorteilhafte Ausbildungen der Erfindung sind in den Unteransprüchen gekennzeichnet.

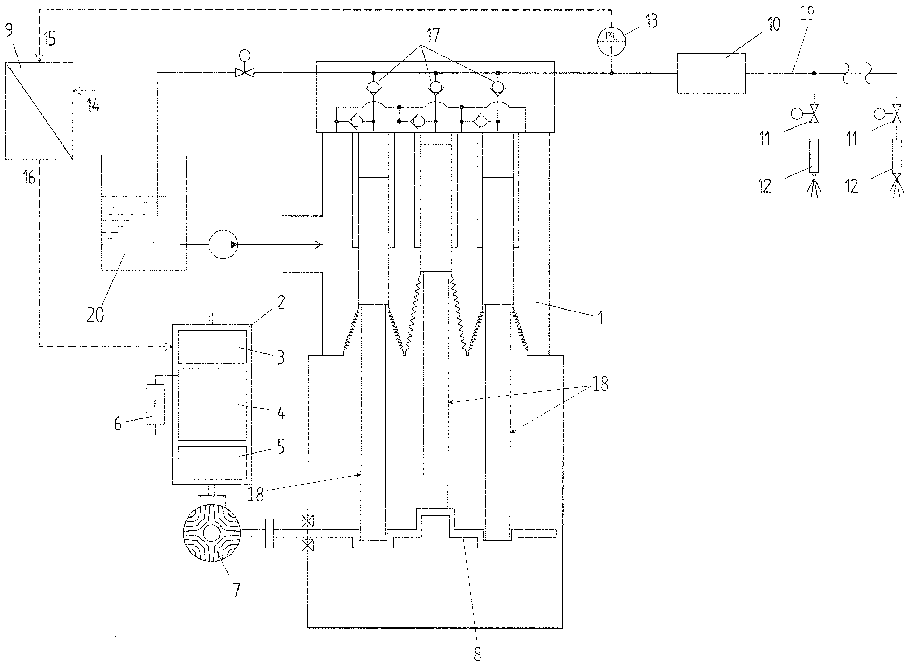

Ein Ausführungsbeispiel der Erfindung wird nachfolgend anhand der beigefügten Zeichnung beschrieben.

Die einzige Figur zeigt den konzeptionellen Aufbau der erfindungsgemäßen Einrichtung in einem Blockschaltbild.

In der Figur ist eine Einrichtung zum Bearbeiten eines Werkstücks abgebildet, mit einer Plungerpumpe 1, die im Beispiel drei Plunger 18 aufweist, die an einer Kurbelwelle 8, vorzugsweise um 120° versetzt zueinander gelagert und mittels eines an der Kurbelwelle 8 angeschlossenen Elektromotors oszillierend antreibbar sind.

Der Elektromotor ist gemäß der Erfindung als Reluktanzmotor 7 ausgebildet und mit einem einen Gleichrichter 3, einen Gleichstromzwischenkreis 4 sowie einen Wechselrichter 5 umfassenden Frequenzumrichter 2 verbunden.

Mit dem Gleichstromzwischenkreis 4 des Frequenzumrichters 2 ist ein Bremswiderstand 6 verbunden, der eine schnelle Absenkung der Drehzahl der Kurbelwelle 8 bei Abschalten des Reluktanzmotors 7 bewirkt.

Saugseitig sind die Plunger 18 mit einem Fluidspeicher 20 verbunden, während das nach einem Arbeitstakt der Plunger 18 unter hohem Druck stehende Fluid über eine Druckleitung 19 im Beispiel zwei Verbrauchern 12 in Form einer Düse zugeführt wird, wobei zwischen der Druckleitung 19 und dem jeweiligen Plunger 18 ein Rückschlagventil 17 angeordnet ist.

Über Absperrventile 11 wird zur Unterbrechung des Volumenstroms aus den Verbrauchern 12 die Druckleitung 19 verschlossen, wobei unmittelbar der Fluiddruck in der Druckleitung 19 ansteigt.

Dieser Druckanstieg wird über einen Drucksensor 13 in der Druckleitung 19 ermittelt, an den ein Regler 9 angeschlossen ist, in dem ein Sollwert 14 mit einem über den Drucksensor 13 erkannten Istwert 15 verglichen und als Stellwert 16 der Reluktanzmotor 7 über den Frequenzumrichter 2 in seiner Drehzahl bis zum Stillstand gedrosselt wird, unter Nutzung des Bremswiderstands 6.

Während dieser Zeit bleibt der Druck in der Druckleitung 19 aufrecht, so dass der Volumenstrom nach einem Öffnen der Absperrventile 11 mit Arbeitsdruck unmittelbar zur Verfügung steht.

Da prinzipiell nach einem Schließen der Druckleitung 19 über die Absperrventile 11 die Drosselung der Drehzahl des Reluktanzmotors 7 über eine gewisse Zeitspanne verzögert erfolgt, steigt der Druck in der Druckleitung 19 weiter an.

Um zu verhindern, dass damit beaufschlagte Bauteile beschädigt werden, ist den Absperrventilen 11 vorgeschaltet in die Druckleitung 19 ein Dämpfer 10 integriert, mittels dessen durch Kompression des Fluids der anstehende höhere Druck aufgenommen wird.

### Bezugszeichenliste

- 1: Plungerpumpe
- 2: Frequenzumrichter
- 3: Gleichrichter
- 4: Gleichstromzwischenkreis
- 5: Wechselrichter
- 6: Bremswiderstand
- 7: Reluktanzmotor
- 8: Kurbelwelle
- 9: Regler
- 10: Dämpfer
- 11: Absperrventil
- 12: Verbraucher
- 13: Drucksensor
- 14: Sollwert
- 15: Ist-Wert
- 16: Stellwert
- 17: Rückschlagventil
- 18: Plunger
- 19: Druckleitung
- 20: Fluidspeicher

## Patentansprüche

1. Einrichtung zum Bearbeiten eines Werkstücks, mit mindestens einer über einen Elektromotor antreibbaren Plungerpumpe (1) zur Erzeugung eines unter hohem Druck stehenden, gesteuert unterbrechbaren Volumenstroms, der aus mindestens einem angeschlossenen Verbraucher (12) austritt, wobei der Volumenstrom unter weitgehend gleichbleibend hohem Druck über eine Druckleitung (19) zum Verbraucher (12) gefördert wird, **dadurch gekennzeichnet, dass** der Elektromotor als Reluktanzmotor (7) ausgebildet ist, der über einen angeschlossenen Frequenzumrichter (2) steuerbar ist, wobei an die Druckleitung (19) ein Drucksensor (13) angeschlossen ist, der mit einem Regler (9) verbunden ist, wobei mit dem Reluktanzmotor (7) ein kapazitiver Energiespeicher über den Frequenzumrichter (2) in Wirkverbindung steht zur Speicherung der Bremsenergie.

2. Einrichtung nach Anspruch 1, **dadurch gekennzeichnet, dass** der Gleichstromzwischenkreis (4) des Frequenzumrichters (2) mit einem Bremswiderstand (6) verbunden ist.

3. Einrichtung nach Anspruch 1 oder 2, **dadurch gekennzeichnet, dass** in der Druckleitung (19) ein Dämpfer (10) angeordnet ist zur Dämpfung eines sich nach einem Abschalten der Plungerpumpe erhöhenden Fluiddrucks.

4. Verfahren zum Betreiben einer Einrichtung nach Anspruch 1, **dadurch gekennzeichnet, dass** anhand einer vorbestimmten Drehzahl der Plungerpumpe (1) der geförderte Volumenstrom mit dem von dem Verbraucher (12) abgenommenen Volumenstrom verglichen und bei einer Abweichung von einer Sollgröße ein Signal gegeben oder der Reluktanzmotor (7) und damit die Plungerpumpe (1) abgeschaltet werden.

## Claims

1. A device for processing a workpiece, having at least one plunger pump (1) operable via an electric motor for generating a volume flow under a high pressure which can be interrupted in a controlled manner and which exits from at least one connected consumer (12), wherein the volume flow is delivered to the consumer (12) via a pressure line (19) under substantially uniform high pressure, **characterized in that** the electric motor is designed as a reluctance motor (7), which is controllable via a connected frequency converter (2), wherein a pressure sensor (13), which is connected to a regulator (9), is connected to the pressure line (19), wherein a capacitive energy accumulator is operationally connected to the reluctance motor (7) via the frequency converter (2) to store the braking energy.

2. The device according to Claim 1, **characterized in that** the DC intermediate circuit (4) of the frequency converter (2) is connected to a brake resistance (6).

3. The device according to Claim 1 or 2, **characterized in that** a damper (10) is arranged in the pressure line (19) for damping a fluid pressure, which increases after a shutdown of the plunger pump.

4. A method for operating a device according to Claim 1, **characterized in that** the delivered volume flow is compared to the volume flow taken by the consumer (12) on the basis of a predetermined speed of the plunger pump (1) and in the event of a deviation from a target value, a signal is provided or the reluctance motor (7) and thus the plunger pump (1) are shut down.

## Revendications

1. Dispositif d'usinage d'une pièce comprenant au moins une pompe à piston (1) pouvant être entraînée par un moteur électrique et destinée à générer un flux volumique à haute pression qui peut être interrompu de manière commandée et qui sort d'au moins un consommateur raccordé (12), le débit volumique étant acheminé au consommateur (12) par le biais d'un conduit sous pression (19) à une pression élevée sensiblement constante, **caractérisé en ce que** le moteur électrique est conçu comme un moteur à réluctance (7) qui peut être commandé par un convertisseur de fréquence raccordé (2), un capteur de pression (13), qui est relié à un régulateur (9), étant raccordé au conduit sous pression (19), un accumulateur d'énergie capacitif étant en liaison active avec le moteur à réluctance (7) par l'intermédiaire du convertisseur de fréquence (2) pour accumuler l'énergie de freinage.

2. Dispositif selon la revendication 1, **caractérisé en ce que** le circuit intermédiaire à courant continu (4) du convertisseur de fréquence (2) est relié à une résistance de freinage (6).

3. Dispositif selon la revendication 1 ou 2, **caractérisé en ce qu'**un amortisseur (10) est disposé dans le conduit sous pression (19) pour amortir une pression de fluide qui augmente après un arrêt de la pompe à piston.

4. Procédé pour faire fonctionner un dispositif selon la revendication 1, **caractérisé en ce qu'**à l'aide d'une vitesse de rotation prédéterminée de la pompe à piston (1), le débit volumique refoulé est comparé au débit volumique prélevé par le consommateur (12) et, en cas d'écart par rapport à une grandeur de consigne, un signal est donné ou le moteur à réluctance (7) et donc la pompe à piston (1) sont arrêtés.
